Europäisches Patentamt

European Patent Office

Office européen des brevets

(19)

(11) **EP 0 813 998 B1**

(12) **EUROPÄISCHE PATENTSCHRIFT**

(45) Veröffentlichungstag und Bekanntmachung des Hinweises auf die Patenterteilung:
**02.11.2000 Patentblatt 2000/44**

(51) Int Cl.$^7$: **B60R 21/00**

(21) Anmeldenummer: **97109101.2**

(22) Anmeldetag: **05.06.1997**

(54) **Zündkreis-Endstufen**

End-stage of an ignition circuit

Circuit de sortie pour allumage

(84) Benannte Vertragsstaaten:
**DE ES FR GB IT SE**

(30) Priorität: **19.06.1996 DE 19624356**

(43) Veröffentlichungstag der Anmeldung:
**29.12.1997 Patentblatt 1997/52**

(73) Patentinhaber: **TEMIC TELEFUNKEN microelectronic GmbH**
**90411 Nürnberg (DE)**

(72) Erfinder:
• **Fendt, Günter**
**86529 Schrobenhausen (DE)**

• **Hora, Peter**
**86529 Schrobenhausen (DE)**
• **Wetzel, Guido**
**86633 Neuburg (DE)**

(74) Vertreter: **Maute, Hans-Jürgen, Dipl.-Ing.**
**TEMIC TELEFUNKEN microelectronic GmbH**
**Postfach 35 35**
**74025 Heilbronn (DE)**

(56) Entgegenhaltungen:
WO-A-95/11819          US-A- 3 863 208
US-A- 4 220 871        US-A- 4 313 379

## Beschreibung

**Die Erfindung betrifft** eine Zündkreis-Endstufe bei Insassen - Schutzsystemen gemäß dem Oberbegriff des Patentanspruchs 1.

In Kraftfahrzeugen befinden sich Auslösegeräte von Schutzeinrichtungen wie Gurtstraffer und Airbag-Systeme, die je nach Ausstattung oder Unfallschwere allein oder zusammen ausgelöst werden. Über einen Beschleunigungsaufnehmer werden die für eine Auslösung relevanten Daten erfaßt und dann über einen Analog- Digitalwandler in einem Mikroprozessor mit Speichereinrichtungen ausgewertet und gespeichert. Diese Informationen werden mit einer Zünd- und Netzwerkansteuerung, auch untereinander ausgetauscht und überprüft, um im Bedarfsfall die einzelnen Sicherheitssysteme zum richtigen Zeitpunkt auszulösen. Die Auslösung einer Schutzeinrichtung erfolgt durch ein Zündmittel, die über eine Zündkreis-Endstufe angesteuert wird. Hierbei handelt es sich in der Regel um eine Zündpille. In der Zündpille befindet sich ein Draht, der sich bei Stromfluß erwärmt und so eine Zündung hervorruft. Der Strom wird in der Regel, nach dem Schließen von zwei Leistungsschaltern, durch einen sich entladenden Kondensator verursacht. In der derzeitigen Generation der Airbag-Steuergeräte sind die Zündkreis-Endstufen dafür ausgelegt/geeignet, daß man pro Endstufe nur eine Zündpille aktivieren kann. Auch wird, aufgrund des großen zulässigen Temperaturbereichs von ca. 85°C - -40°C bei derartigen KFZ-Anwendungen, der durch einen einstufigen Gasgenerator gefüllte Luftsack mit unterschiedlichem, temperaturabhängigem Druck aufgeblasen. Aus diesem Grunde werden jetzt Gasgeneratoren entwickelt, die in mehreren Stufen gezündet werden können. Für die mehrstufige Zündung eines Gasgenerators werden jedoch mindestens zwei Zündmittel benötigt. Jedes Zündmittel muß hierbei von einer separaten Endstufe angesteuert werden.

**Nachteilig an den** bisherigen Zündkreis-Endstufen ist jedoch, daß bei einer mehrstufigen Zündfolge eines oder mehrerer Gasgeneratoren für jede Zündung ein Zündmittel benötigt wird, das jeweils eine eigene Endstufe aufweisen muß. Jede Endstufe verursacht immer eine zusätzliche Anschlußleitung zum Gasgenerator. Dadurch wird am Anschlußstecker des Steuergerätes für jeden Gasgenerator ein zusätzlicher Steckerpin benötigt, im Steuergerät muß eine zusätzliche Ausgangsendstufe vorhanden sein und durch die zusätzliche Kabelführung wird der bestehende Kabelbaum aufwendiger.

Weiterhin ist aus der US 4 220 871 A eine Zündkreis-Endstufe nach dem Oberbegriff des Anspruchs 1 bekannt, die zwei parallel geschaltete Auslöser beinhaltet, welche beide einen ähnlichen Widerstandswert aufweisen und vor die jeweils ein zusätzlicher Widerstand in Reihe geschaltet ist. Die Größe dieses Vorwiderstandes ist so gewählt, daß auch bei Kurzschluß eines Zündmittels das andere Zündmittel mit einem genügend hohen Strom versorgt und ausgelöst wird.

**Nachteilig** hierbei ist jedoch, daß ein Zündmittel nur dann einzeln gezündet wird, wenn ein Defekt am anderen Zündmittel auftritt.

**Der Erfindung liegt daher die Aufgabe zugrunde** mit nur einer Zündkreis-Endstufe mehrere oder mehrstufige Zündungen mit mindestens zwei Zündmitteln zu realisieren und so zu steuern, daß die Zündmittel sowohl einzeln als auch mehrere in kurzen Abständen nacheinander aktiviert werden.

**Diese Aufgabe wird erfindungsgemäß durch die Merkmale des Patentanspruchs 1 gelöst**. Bei der erfindungsgemäßen Zündkreis-Endstufe werden mindestens zwei Zündmittel **6, 7** mit unterschiedlichen Zündmittel-Widerständen und unterschiedlichen elektrischen Kennlinien parallel geschaltet. Hierbei werden die Zündmittel durch das Eingangssignal am Steuereingang der Zündkreis-Endstufe, das den Strom durch das Zündmittel regelt und begrenzt, aktiviert. Vorteilhafte Weiterbildungen der Erfindung ergeben sich aus den Unteransprüchen bei denen die Ausgangsspannung der Endstufe je nach Betriebszustand schaltungstechnisch geregelt wird. Dies kann durch einen Aufwärts- und/oder Abwärtswandlersteuerung **24/25** bzw. einer Spannungsbegrenzungsschaltung **26** realisiert werden.

**Die mit der Erfindung erzielten Vorteile bestehen** insbesondere darin, daß die Anzahl und Länge der Zuleitungen reduziert wird und somit auch der Kabelbaum verkleinert und vereinfacht werden kann. Weiterhin kann am Anschlußstecker des Steuergerätes die Anzahl der Steckerpins verringert werden. Auch können mit derartigen Zündkreis-Endstufen sowohl ältere einstufige Gasgeneratoren als auch die neuen mehrstufigen Gasgeneratoren angesteuert werden, wodurch man z.B. erreicht, daß bei + 85°C nur eine Stufe eines Gasgenerators gezündet wird und bei -40°C zwei Stufen gezündet werden, sodaß sich die Schwankungen in der Druckanstiegskennlinie bei verschiedenen Temperaturen stark reduzieren. Ein weiterer Vorteil der Erfindung wird ebenfalls darin gesehen, daß z.B. bei einem leichten Unfall nur der Gurtstraffer und bei einem schweren Unfall der Gurtstraffer und der dazugehörige Airbag mit ein und derselben Zündkreis-Endstufe ausgelöst werden kann. Auch kann durch diese Ansteuerung insbesondere des Aufwärtswandlers **24** die Dimension eines Versorgungskondensators **12**, der als Energiespeicher dient, verringert werden, da auch bei einer niedrigen Kondensatorspannung ein ausreichend hoher Zündstrom erreicht werden kann.

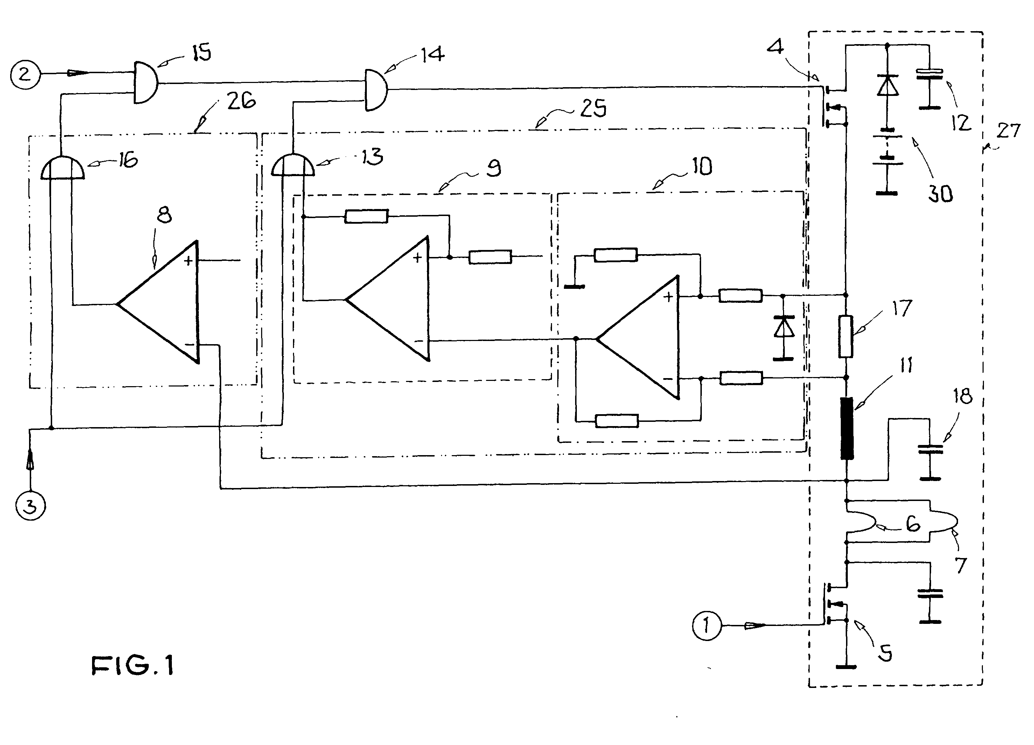

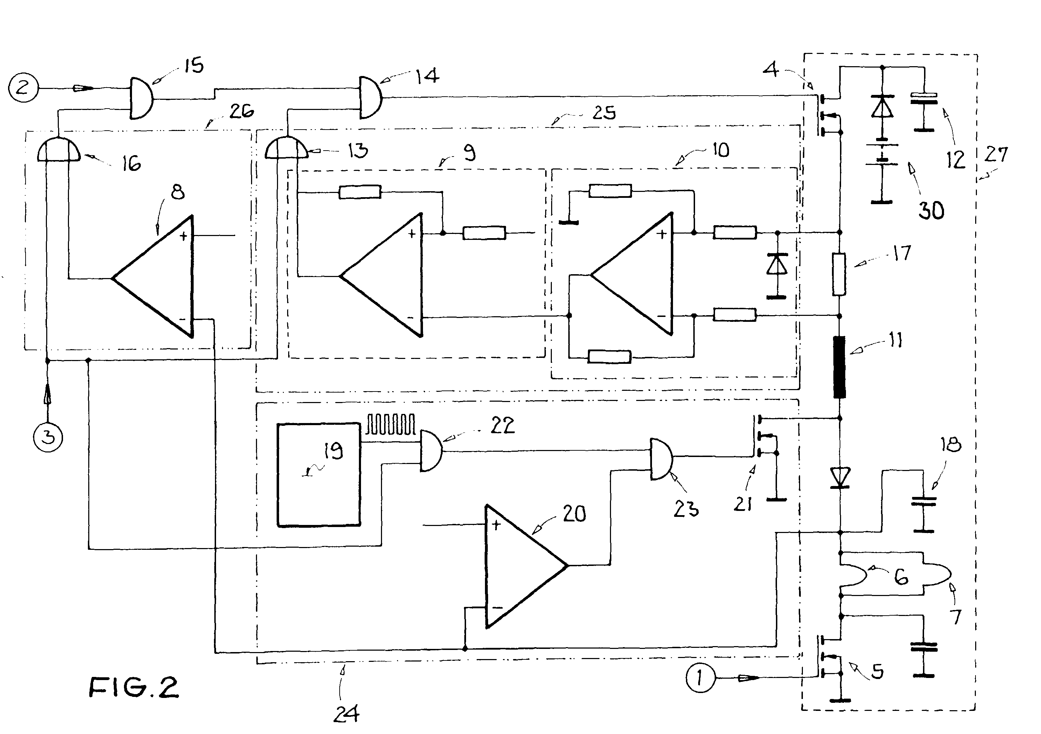

Die Erfindung soll anhand der **Figuren 1** und **2** dargestellt werden. Es zeigen:

**Figur 1**: Zündkreis-Endstufe mit Abwärtswandlersteuerung

**Figur 2**: Zündkreis-Endstufe mit Aufwärtswandlersteuerung

**Figur 1** zeigt ein Beispiel einer erfindungsgemäßen Zündkreis-Endstufe. Diese besteht im wesentlichen aus einem Abwärtswandlersteuerung **25** und einer Spannungsbegrenzungsschaltung **26** die durch eine entsprechende Logik die Zündschaltung **27** steuert.

Die Eingänge **1, 2, 3** dieser Zündkreis-Endstufe werden von einem oder mehreren Mikroprozessor/en angesteuert. Als Zündmittel werden im Anwendungsbeispiel Zündpillen verwendet. Bevor die verschieden ohmigen Zündpillen **6, 7** durch einen entsprechend hohen Stromfluß bzw. Spannung überhaupt ausgelöst werden können, müssen die beiden Leistungsschalter **4** und **5** geschlossen werden. Dies geschieht indem am Eingang **1** ein Signal für den ersten Leistungsschalter **5** und am Eingang **2** ein Signal für den zweiten Leistungsschalter **4** unabhängig voneinander eingespeist werden. Am Steuereingang **3** können nun zwei verschiedene Signale HIGH oder LOW oder Signalfolgen eingespeist werden, die z.B. einen leichten bzw. schweren Unfall oder einen niedrigen bzw. hohen Temperaturbereich anzeigen.

Ein HIGH-Signal entspricht in der Beschreibung einer logischen EINS bzw. einem Aktiv-Signal. Das LOW Signal entspricht der logischen NULL. In den folgenden Anwendungsbeispielen wird zur Vereinfachung nur der Versorgungskondensator **12** als Energiespeicher erwähnt. Jedoch gilt alles analog auch für die Bord-Batterie **30**, die je nach Anwendungsfall auch als Energiespeicher dienen kann.

**Fall 1:**

Am Steuereingang **3** wird das Signal LOW angelegt.

Über die ODER - Verknüpfungen **16** und **13** wird ein Signal immer dann an die nächst gelegene UND-Verknüpfungen **15** bzw. **14** weitergeleitet, wenn am jeweils anderen Eingang dieser ODER-Verknüpfungen, dem Komparator **8** bzw. dem Schmitt-Trigger **9**, ein HIGH Signal anliegt. Liegt am anderen Eingang der UND-Verknüpfung **15** ebenfalls das Signal HIGH an, welches vom Eingang **2** stammt und den Leistungschalter **4** schließen soll, so wird das HIGH Signal an den zweiten Eingang der anderen UND-Verknüpfung **14** weitergeleitet. Dort kann wie bereits vorab beschrieben am ersten Eingang ebenfalls ein HIGH Signal anliegen. Das HIGH Signal gelangt an den Leistungsschalter **4**, wodurch dieser geschlossen wird. Ist nun ebenfalls der Leistungsschalter **5** durch ein entsprechendes Signal am Eingang **1** geschlossen worden, so entlädt sich der Energiespeicher, der im Anwendungsbeispiel als z.B. 50 V Versorgungskondensator **12** dargestellt wird. Durch den Widerstand **17** beginnt ein Strom zu fließen. Dieser Strom gelangt zum einen über eine Differenzverstärkerschaltung **10** in einen Schmitt-Trigger **9**. Der Schmitt-Trigger **9** soll funktional in dem hier aufgeführten Beispiel folgende Kennwerte haben:

$$U_{on} = 2\ V \quad \Rightarrow 1\ A$$
$$U_{off} = 8\ V \quad \Rightarrow 4\ A$$
$$\Rightarrow \varnothing = 2{,}5\ A$$

Zum anderen wird mit diesem Strom in einer Spule **11** ein magnetisches Feld aufgebaut. Die Spule **11** dient hierbei als Energiezwischenspeicher.

Steigt nun der Durchschnittsstrom über 2,5 A auf 4 A so gibt der Schmitt-Trigger **9** ein LOW-Signal an die ODER-Verknüpfung **13** weiter. An der UND-Verknüpfung **14** liegt dann nur noch an einem Eingang ein HIGH-Signal an. Dies hat zur Folge, daß der Leistungsschalter **4** geöffnet wird. Der Versorgungskondensator **12** wird nicht weiter entladen. Der Strom sinkt unter 2,5 A auf 1 A. Über den Differenzverstärker **10** wird dann der Schmitt-Trigger **9** wieder eingeschaltet, an der ODER-Verknüpfung **13** und an der UND-Verknüpfung **14** ein HIGH-Signal erzeugt und somit der Leistungsschalter **4** wieder aktiviert. Der Versorgungskondensator **12** entlädt sich wieder. Der Leistungschalter **4** wird getaktet. Durch das Takten des Leistungsschalters **4** wird der Durchschnittsstrom, der durch die Zündpillen fließen kann auf z.B. 2,5 A geregelt. Gleichzeitig wird an einen Kondensator **18** die Spannung an den Zündpillen gemessen und an einem Komparator **8** mit einer z.B. 15 V Referenzspannung verglichen. Steigt die Spannung über 15 V so wird der gesamte Zündkreis sofort unterbrochen. Dadurch gelangt nur soviel Energie an die niederohmige Zündpille **6**, deren Kennwert z.B. 1,75 A / 6 Ω ist, daß nur diese dadurch ausgelöst wird. Bei der hochohmigen Zündpille wird bei 15 V der Zündstrom nicht erreicht.

Eine weitere Aktivierung des Zündkreises bzw. der verbleibenden Zündpille **7** ist erst dann möglich, wenn vom Steuereingang **3** aus ein HIGH-Signal angelegt wird. Das bedeutet Fall 2 tritt ein, bei dem die verbliebene Spannung des Versorgungskondensators **12** auch die zweite, hochohmige Zündpille **7** auslösen kann.

**Fall 2:**

Am Steuereingang **3** wird das Signal HIGH angelegt. In diesem Fall kann das HIGH-Signal z.B. für eine niedrige Temperatur stehen bei der die verbleibende/n Stufen eines Gasgenerators gezündet werden sollen oder für einen schweren Unfall bei dem z.B. Airbag und Gurtstraffer ausgelöst werden müssen. In diesem Fall wurde vorher bereits durch das LOW Signal, wie oben beschrieben, die erste Zündpille aktiviert.

Über die ODER - Verknüpfungen **16** und **13** wird das HIGH-Signal von Eingang **3** immer, unabhängig von den Signalen am anderen Eingang dieser ODER-Verknüpfungen, an die UND-Verknüpfungen **15** und **14** weitergeleitet. Liegt am anderen Eingang der UND-Verknüpfung **15** ebenfalls das Signal HIGH von Eingang **2** an, welches den Leistungschalter **4** schließen soll, so wird das Signal an den zweiten Eingang der anderen UND-Verknüpfung **14** weitergeleitet. Dort liegt wie bereits vorab beschrieben am anderen Eingang ebenfalls ein HIGH Signal an. Das HIGH Signal gelangt an den Leistungsschalter **4**, wodurch dieser geschlossen wird. Ist nun ebenfalls der Leistungsschalter **5** durch ein entsprechendes Signal am Eingang **1** geschlossen worden, so entlädt sich der Versorgungskondensator **12** mit der verbliebenen Spannung.

Bei dieser Entladung wird soviel Energie frei, daß die hochohmige Zündpille **7**, deren Kennwert z.B. 0,175 A / 200 $\Omega$ ist, mit der für die Auslösung benötigten Energie versorgt wird. Die zusätzliche Zündstufen bewirkt, daß der Gassack mit mehr Gas gefüllt wird oder ein anderes unabhängig voneinander arbeitendes Sicherheitssystem (z.B. Airbag, Gurtstraffer) zusätzlich ausgelöst wird.

**Figur 2** zeigt ein anderes Beispiel einer erfindungsgemäßen Zündkreis-Endstufe. Hierbei ergibt sich als wesentlicher Unterschied zu Figur 1 eine zusätzliche Aufwärtswandlersteuerung **24**, die bei Unterschreiten einer zur Auslösung benötigten Spannung die verbliebene Restspannung hochtransformiert.

Die Eingänge **1**, **2**, **3** dieser Zündkreis-Endstufe werden von einem oder mehreren Mikroprozessor/en angesteuert. Bevor die verschieden ohmigen Zündpillen durch einen entsprechend hohen Stromfluß bzw. Spannung überhaupt ausgelöst werden können, müssen die beiden Leistungsschalter **4** und **5** geschlossen werden. Dies geschieht indem am Eingang **1** das Signal für den ersten Leistungsschalter **5** und am Eingang **2** das Signal für den zweiten Leistungsschalter **4** unabhängig voneinander eingespeist wird. An dem Steuereingang können nun verschiedene Signale eingespeist werden, die z.B. einen leichten Unfall bzw. schweren Unfall oder einen niedrigen Temperaturbereich bzw. hohen Temperaturbereich anzeigen.

**Fall 1:**

Am Steuereingang **3** wird das Signal LOW angelegt.

Über die ODER - Verknüpfungen **16** und **13** wird dieses Signal immer dann an die nächst gelegene UND-Verknüpfungen **15** bzw. **14** weitergeleitet, wenn am jeweils anderen Eingang dieser ODER-Verknüpfungen, dem Komparator **8** bzw. dem Schmitt-Trigger **9**, ein HIGH Signal anliegt. Liegt am anderen Eingang der UND-Verknüpfung **15** ebenfalls das Signal HIGH an, welches vom Eingang **2** stammt und den Leistungschalter **4** schließen soll, so wird das HIGH Signal an den zweiten Eingang der anderen UND-Verknüpfung **14** weitergeleitet. Dort kann wie bereits vorab beschrieben am ersten Eingang ebenfalls ein HIGH Signal anliegen. Das HIGH Signal gelangt an den Leistungsschalter **4**, wodurch dieser geschlossen wird. Ist nun ebenfalls der Leistungsschalter **5** durch ein entsprechendes Signal am Eingang **1** geschlossen worden, so entlädt sich der in diesem Fall z.B. auf 50 V geladene Versorgungskondensator **12**. Durch den Widerstand **17** beginnt ein Strom zu fließen. Dieser Strom gelangt zum einen über eine Differenzverstärkerschaltung **10** in einen Schmitt-Trigger **9**. Der Schmitt-Trigger **9** soll in dem hier aufgeführten Beispiel funktional folgende Kennwerte haben:

$$U_{on} = 2\ V \Rightarrow 1\ A$$
$$U_{off} = 8\ V \Rightarrow 4\ A \qquad \Rightarrow \varnothing = 2,5\ A$$

Zum anderen wird mit diesem Strom in einer Spule **11** ein magnetisches Feld aufgebaut. Die Spule **11** dient hierbei als Energiespeicher.

Steigt nun der Durchschnittsstrom über 2,5 A auf 4 V so gibt der Schmitt-Trigger **9** ein LOW-Signal an die ODER-Verknüpfung **13** weiter. An der UND-Verknüpfung **14** liegt dann nur noch an einem Eingang ein HIGH-Signal an. Dies hat zur Folge, daß der Leistungsschalter **4** geöffnet wird. Der Kondensator **12** wird nicht weiter entladen. Der Strom sinkt unter 2,5 A auf 1 A. Über den Differenzverstärker **10** wird dann der Schmitt-Trigger **9** wieder eingeschaltet, an der ODER-Verknüpfung **13** und an der UND-Verknüpfung **14** ein HIGH-Signal erzeugt und somit der Leistungsschalter **4** wieder aktiviert. Der Versorgungskondensator **12** entlädt sich wieder. Durch das Takten des Leistungsschalters **4** wird der Durchschnittsstrom, der durch die Zündpillen fließen kann auf z.B. 2,5 A geregelt. Gleichzeitig wird an einen Kondensator **18** die Spannung an den Zündpillen gemessen und an einem Komparator **8** mit einer z.B. 15 V Referenzspannung verglichen. Steigt die Spannung über 15 V so wird der gesamte Zündkreis sofort unterbrochen. Dadurch gelangt nur soviel Energie an die niederohmige Zündpille **6**, deren Kennwert z.B. 1,75 A/6 Ω ist, daß nur diese dadurch ausgelöst wird. Bei der hochohmigen Zündpille wird bei 15 V der Zündstrom nicht erreicht

Eine weitere Aktivierung des Zündkreises bzw. der verbleibenden Zündpille **7** ist erst dann wieder möglich, wenn vom Steuereingang **3** aus ein HIGH-Signal angelegt wird. Das bedeutet Fall 2 tritt ein, bei dem die verbleibenden Spannung des Versorgungskondensators **12** auch die zweite hochohmige Zündpille **7** auslösen kann.

**Fall 2:**

Nach Anlegen des LOW Signals zur Zündung der niederohmigen Zündpille wird danach zum Zünden der hochohmigen Zündpille am Steuereingang **3** das Signal HIGH angelegt. In diesem Fall kann das HIGH-Signal z.B. für eine niedrige Temperatur stehen bei der mehrere Stufen eines Gasgenerators gezündet werden sollen oder für einen schwereren Unfall bei dem Airbag und Gurtstraffer ausgelöst werden müssen.

Über die ODER - Verknüpfungen **16** und **13** wird das HIGH-Signal immer, unabhängig von den Signalen am anderen Eingang einer ODER-Verknüpfungen, an die UND-Verknüpfungen **15** und **14** weitergeleitet. Liegt am anderen Eingang der UND-Verknüpfung **15** ebenfalls das Signal HIGH an, welches den Leistungschalter **4** schließen soll, so wird das HIGH Signal an den zweiten Eingang der anderen UND-Verknüpfung **14** weitergeleitet. Dort liegt wie bereits vorab beschrieben am ersten Eingang ebenfalls ein HIGH Signal an. Das HIGH Signal gelangt an den Leistungsschalter **4**, wodurch dieser geschlossen wird. Ist nun ebenfalls der Leistungsschalter **5** durch ein entsprechendes Signal am Eingang **1** geschlossen worden, so entlädt sich der Kondensator **12**. Man ist jedoch bei der Zündung der hochohmigen Zündpille **7** darauf angewiesen, daß im Speicherkondensator **12** noch genügend Spannung bzw. Energie vorhanden ist, damit der Auslösestrom noch zustande kommt. Bei Leitungsverlusten kann die verbleibende Spannung jedoch z. B. unter 35 V absinken. Dies hat zur Folge, daß die verbleibende Energie unterhalb der Mindestspannung von z.B. 35 V nicht mehr ausgenutzt werden kann, um einen entsprechend hohen Zündstrom zu erzeugen. Daher ist es von Vorteil, daß die Endstufe auch eine Aufwärtswandlersteuerung **24** beinhaltet. Dabei wird die Kondensatorspannung wieder auf z.B. 50V hoch transformiert. Dies wird durch die Aufwärtswandlersteuerung **24** wie folgt realisiert:

Liegt, wie bereits oben erwähnt, das Signal HIGH an Eingang **3** an, dann gelangt diese Signal an die UND-Verknüpfung **22**. Sendet der z.B.: 1MHz Oszillator **19** ebenfalls ein Signal an die UND-Verknüpfung **22**, so wird dieses Signal an die andere UND-Verknüpfung **23** weitergeleitet. An die UND-Verknüpfung **23** gelangt ebenfalls das Signal vom (z.B. 50 V) Komparator **20**, der die Spannung an der Zündpille mißt. Ist hier die Spannung unter einen bestimmten Wert z. B. 50 V abgesunken, so entsteht im Komparator ebenfalls ein HIGH-Signal, so daß die UND-Verknüpfung durchschaltet und über den Leistungsschalter **21** wieder eine Spannung von 50 V an der Zündpille **7** herstellt.

Das hat den Vorteil, daß auch die Energie, welche im Kondensator **12** bei einer Spannung von unterhalb einer Spannung, die bei einer hochohmigen Zündpille zu keinem ausreichenden Zündstrom führen würde, noch vorhanden ist, ausgenützt werden kann und der Kondensator somit in der Dimensionierung wesentlich kleiner ausgelegt werden kann. Bei dieser Entladung wird soviel Energie frei, daß die hochohmige Zündpille **7**, deren Kennwert z.B. 0,175 A / 200 Ω ist, mit der für die Auslösung benötigten Energie versorgt wird. Es werden zwei Zündstufen beansprucht, die dazu verwendet werden können, daß der Gassack mit mehr Gas gefüllt wird oder zwei auch unabhängig voneinander arbeitende Sicherheitssysteme (z.B. Airbag und Gurtstraffer) gleichzeitig sequentiell ausgelöst werden können.

**Patentansprüche**

**1.** Zündkreis-Endstufe, die zur Auslösung von Insassen - Schutzsystemen für Kraftfahrzeuge dient,

- von einem oder mehreren Mikroprozessor/en angesteuert wird
- mindestens zwei parallel geschaltete Zündmittel (6, 7) enthält, und
- deren Zündmittel (6, 7) in einer Auslösesituation aus einem Energiespeicher insbesondere der Bord-Batterie (30) oder einem Kondensator (12) mit der Auslöseenergie versorgt werden,

**dadurch gekennzeichnet, daß** die parallel geschaltete Zündmittel (6, 7) jeweils einen unterschiedlichen Zündmittelwiderstand aufweisen, wobei der vom Zündmittelwiderstand abhängige Zündstrom durch das Eingangssignal am Steuereingang (3) der Zündkreis-Endstufe eingestellt wird und so in Abhängigkeit von der Höhe des eingestellten Zündstromes nur ein einzelnes Zündmittel ausgelöst wird oder aber mehrere Zündmittel nacheinander ausgelöst werden.

2.  Zündkreis-Endstufe nach Patentanspruch 1, **dadurch gekennzeichnet, daß** die Spannung aus dem Energiespeicher (12, 30), insbesondere durch eine Abwärtswandlersteuerung (25), herab geregelt wird.

3.  Zündkreis-Endstufe, nach Patentanspruch 1, **dadurch gekennzeichnet, daß** in der Zündkreis-Endstufe in Abhängigkeit vom Strom durch die Zündmittel (6, 7), einen Schalter (4) getaktet und so der Strom geregelt und begrenzt wird.

4.  Zündkreis-Endstufe nach einem der vorangegangenen Patentansprüche, **dadurch gekennzeichnet, daß** diese Zündkreis-Endstufe mindestens eine Spannungsbegrenzungsschaltung (26) beinhaltet.

5.  Zündkreis-Endstufe nach einem der vorangegangenen Patentansprüche, **dadurch gekennzeichnet, daß** diese Zündkreis-Endstufe die Spannung aus dem Energiespeicher insbesondere durch einen Aufwärtswandlersteuerung (24), hoch geregelt wird.

6.  Zündkreis-Endstufe nach einem der vorangegangenen Patentansprüche, **dadurch gekennzeichnet, daß** mindestens zwei verschiedene Ausgangsspannungen, die an einem oder mehreren Zündmittel/n (6, 7) anliegen, ausgewählt werden können.

7.  Zündkreis-Endstufe nach einem der vorangegangenen Patentansprüche, **dadurch gekennzeichnet, daß** zuerst durch ein erstes Signal das niederohmige Zündmittel (6) aus dem Energiespeicher gezündet wird und dann bei Bedarf durch ein zweites Signal das hochohmige Zündmittel (7) aus dem Energiespeicher (30, 12) mit der verbliebenen Energie gezündet wird.

**Claims**

1.  A power output stage of an ignition circuit, which serves to trigger the occupant protection systems used in motor vehicles,

    -   is controlled by one or more microprocessor(s)

    -   includes at least two ignition means (6, 7) connected in parallel, and

    -   wherein, in a triggering situation, the ignition means (6, 7) are supplied with the triggering energy from an energy storing device, in particular, the on-board battery (3) or a capacitor (12),

    characterised in that the resistance of the ignition means differs in each of the parallel ignition means (6, 7), whereby the ignition current, which is dependent on the resistance of the ignition means, is adjusted by the input signal at the control input (3) of the power output stage of the ignition circuit in such a manner that only a single ignition means is triggered or else a plurality of ignition means are triggered in succession in dependence on the magnitude of the adjusted ignition current.

2.  A power output stage of an ignition circuit in accordance with Claim 1, characterised in that the voltage of the energy storing device (12, 30) is regulated in a downward manner, in particular, by means of a step-down transformer control arrangement (25).

3.  A power output stage of an ignition circuit in accordance with Claim 1, characterised in that a switch (4) in the power output stage of the ignition circuit is clocked in dependence on the current through the ignition means (6, 7) in a manner such that the current is regulated and limited.

4.  A power output stage of an ignition circuit in accordance with any of the preceding Claims, characterised in that this ignition circuit power output stage includes at least one voltage limiting circuit (26) .

5.  A power output stage of an ignition circuit in accordance with any of the preceding Claims, characterised in that this ignition circuit power output stage, the voltage of the energy storing device is regulated in an upward direction, in particular, by means of a step-up transformer control arrangement (24).

6.  A power output stage of an ignition circuit in accordance with any of the preceding Claims, characterised in that at least two different output voltages that are present on one or more ignition mean(s) (6, 7) can be selected.

7. A power output stage of an ignition circuit in accordance with any of the preceding Claims, characterised in that the low resistance ignition means (6) is ignited first by the energy storing device with the aid of a first signal, and then the high resistance ignition means (7) is ignited by the remaining energy in the energy storing device (30, 12) with the aid of a second signal should this be necessary.

**Revendications**

1. Etage final de circuit d'amorçage, qui sert à déclencher des systèmes de protection pour les passagers de véhicules automobiles,

   - est commandé par un ou plusieurs microprocesseurs,
   - contient au moins deux moyens d'amorçage (6,7) branchés en parallèle, et
   - les moyens d'amorçage (6,7) de l'étage final sont alimentés, dans une situation de déclenchement, par l'énergie de déclenchement, à partir d'un accumulateur d'énergie, notamment la batterie de bord (30) ou un condensateur (12),

   caractérisé en ce que les moyens d'amorçage (6,7) branchés en parallèle possèdent chacun une résistance différente, le courant d'amorçage, qui dépend de la résistance des moyens d'amorçage, étant réglé par le signal d'entrée appliqué à l'entrée de commande (3) de l'étage final du circuit d'amorçage et ainsi, un seul moyen d'amorçage individuel est déclenché en fonction de l'amplitude du courant d'amorçage réglé ou bien plusieurs moyens d'amorçage sont déclenchés successivement.

2. Etage final de circuit d'amorçage selon la revendication 1, caractérisé en ce que la tension provenant de l'accumulateur d'énergie (12,30) est réduite par réglage, notamment par une commande par un convertisseur abaisseur (25).

3. Etage final de circuit d'amorçage selon la revendication 1, caractérisé en ce que dans l'étage final du circuit d'amorçage, un interrupteur (4) est commandé de façon cadencée en fonction du courant traversant le moyen d'amorçage (6,7) et le courant est ainsi réglé et limité.

4. Etage final de circuit d'amorçage selon l'une des revendications précédentes, caractérisé en ce que cet étage final de circuit d'amorçage contient au moins un circuit de limitation de tension (26).

5. Etage final de circuit d'amorçage selon l'une des revendications précédentes, caractérisé en ce que cet étage final de circuit d'amorçage règle à une valeur élevée la tension délivrée par l'accumulateur d'énergie, notamment au moyen d'une commande par une unité de commande (24) à convertisseur élévateur.

6. Etage final de circuit d'amorçage selon l'une des revendications précédentes, caractérisé en ce que l'on peut sélectionner au moins deux tensions de sortie différentes, qui s'appliquent à un ou plusieurs moyens d'amorçage (6,7).

7. Etage final de circuit d'amorçage selon l'une des revendications précédentes, caractérisé en ce que le moyen d'amorçage de faible valeur ohmique (6) est amorcé par un premier signal à partir de l'accumulateur d'énergie et qu'ensuite le cas échéant le moyen d'amorçage de forte valeur ohmique (7) est amorcé par un second signal à partir de l'accumulateur d'énergie (30,12), avec l'énergie restante.

FIG.1

FIG.2